# EUROPÄISCHE PATENTSCHRIFT

(11) **EP 3 123 048 B1**
(45) Veröffentlichungstag und Bekanntmachung des Hinweises auf die Patenterteilung: **23.10.2019**
(21) Anmeldenummer: 15715146.5
(22) Anmeldetag: 24.02.2015
(51) Int. Cl.: F16D 13/75

(54) **WEGGESTEUERTE NACHSTELLEINRICHTUNG FÜR EINE REIBKUPPLUNG**
PATH-CONTROLLED ADJUSTING DEVICE FOR A FRICTION CLUTCH
DISPOSITIF DE RATTRAPAGE À COMMANDE PROPORTIONNELLE À LA COURSE POUR EMBRAYAGE À FRICTION

(30) Priorität: 25.03.2014 DE 102014205502
(43) Veröffentlichungstag der Anmeldung: 01.02.2017
(73) Patentinhaber: Schaeffler Technologies AG & Co. KG, 91074 Herzogenaurach (DE)
(72) Erfinder: FINKENZELLER, Marc, 77723 Gengenbach (DE); BIRK, Michael, 77815 Bühl (DE)
(86) Internationale Anmeldenummer: PCT/DE2015/200101
(87) Internationale Veröffentlichungsnummer: WO 2015/144154

(56) Entgegenhaltungen:
- DE-A1-102008 019 947
- DE-A1-102009 032 332
- DE-A1-102011 087 994

## Beschreibung

Die Erfindung betrifft eine weggesteuerte Nachstelleinrichtung für eine Reibkupplung gemäß dem Oberbegriff des Patentanspruchs 1.

Im Stand der Technik ist ein Spindeltrieb bekannt, bei dem die Spindelmutter selbst (einseitig) direkt in einen Nachstellring eingreift, wodurch eine Verkippung der Spindelmutter auftreten kann. Eine Verkippung bewirkt eine Erhöhung der Reibung zwischen der Spindelmutter und dem Spindeltrieb oder führt sogar zu einem Verkanten der Spindelmutter und somit zu einem Blockieren der gesamten Nachstelleinrichtung.

Ferner ist aus der DE 10 2011 087 994 A1 eine weggesteuerte Nachstelleinrichtung bekannt, die auf den Oberbegriff des Patentanspruchs 1 lesbar ist.

Der vorliegenden Erfindung liegt die Aufgabe zugrunde, die aus dem Stand der Technik bekannten Nachteile zumindest teilweise zu überwinden. Die Aufgabe wird durch die Merkmale des unabhängigen Patentanspruchs 1 gelöst. Vorteilhafte Weiterbildungen sind Gegenstand der abhängigen Patentansprüche.

Die Erfindung betrifft einen Spindeltrieb für eine weggesteuerte Nachstelleinrichtung, welcher zumindest die folgenden Komponenten aufweist:
- eine Spindelwelle mit einem Schneckentrieb;
- eine Spindelmutter, die mittels des Schneckentriebs der Spindelwelle infolge einer Verdrehung der Spindelwelle translatorisch bewegbar ist;
- ein Antriebsritzel zum Antreiben der Spindelwelle;
- eine an einem Kupplungsdeckel befestigbare Antriebsklinke zum weggesteuerten Antreiben des Antriebsritzels;
- eine Aufnahme für die Spindelwelle, die die Spindelwelle axial fixiert; und
- ein Übertragungselement, welches dazu eingerichtet ist, die translatorische Bewegung der Spindelmutter auf einen um eine quer zur Spindelwelle ausgerichtete Rotationsachse verdrehbaren Nachstellring zu übertragen. Der Spindeltrieb kennzeichnet sich vor allem dadurch, dass das Übertragungselement ein um die Rotationsachse verkippbares Blechelement umfasst, über welches im Zusammenbau die Übertragungskraft von der Spindelmutter auf den Nachstellring zentral auf die Spindelmutter einleitbar ist.

Der hier vorgeschlagene Spindeltrieb für eine weggesteuerte Nachstelleinrichtung sorgt für einen wegabhängigen Antrieb eines Nachstellerings, in dem eine Zunahme des Einrückwegs zwischen einer Anpressplatte und einer korrespondierenden Reibscheibe aufgrund einer Abnahme der Gesamtdicke eines dazwischen angeordneten Reibbelags ausgeglichen wird.

Hierzu ist zunächst eine Antriebsklinke an einem axial fixierten Bauteil der Reibkupplung angeordnet, bevorzugt an einem Kupplungsdeckel einer Reibkupplung, wobei die Antriebsklinke im Zusammenbau (der Reibkupplung) in ein Antriebsritzel eingreift. Nimmt der Einrückweg der Anpressplatte zu, wird die Antriebsklinke relativ zum Antriebsritzel derart ausgelenkt, dass das Antriebsritzel verdreht wird. Hierdurch wird die Spindelwelle angetrieben, das heißt der Schneckentrieb wird verdreht und somit die (rotatorisch fixierte) Spindelmutter translatorisch bewegt. Die Spindelwelle wird dabei in einer Aufnahme gehalten, die an einem Bauteil der Reibkupplung fixiert ist. Zur Übertragung der Bewegung der Spindelmutter ist ein Übertragungselement vorgesehen, welches bevorzugt in den verdrehbaren Nachstellring eingreift. Der Nachstellring ist dabei besonders bevorzugt um die Rotationsachse einer Reibkupplung verdrehbar. Durch die Verdrehung des Nachstellrings wird eine Gesamthöhe verändert, sodass trotz abnehmender Reibbelagdicke sowohl der Einrückweg der Reibpartner, insbesondere einer Anpressplatte, als auch der Betätigungsweg einer Betätigungseinrichtung (nahezu) konstant bleibt. Hier wird nun vorgeschlagen, das Übertragungselement als verkippbares Blechelement auszuführen, sodass die Relativbewegung zwischen der sich rein translatorisch bewegenden Spindelmutter und der sich dazu auf einem Umfangsweg bewegenden Nachstellring ausgeglichen wird. Hierdurch ist es möglich, die Übertragungskraft zentral auf die Spindelmutter einzuleiten. Damit ist gemeint, dass die Spindelmutter in Bezug auf den Schneckentrieb derart belastet wird, dass ein Verkippen der Spindelmutter relativ zum Schneckentrieb aufgrund der Übertragungskraft ausgeschlossen ist. Somit wird die Reibung zwischen Spindelmutter und Schneckentrieb reduziert und ein Verkanten vermieden.

Gemäß einer weiteren vorteilhaften Ausführungsform des Spindeltriebs weist das Blechelement einen ersten Flansch auf, welcher dazu eingerichtet ist, an der Spindelmutter anzuliegen, sodass das Blechelement infolge einer translatorischen Bewegung der Spindelmutter von der Spindelmutter verkippungsfrei in Bewegungsrichtung geschoben wird.

Der erste Flansch ist hierbei derart eingerichtet, dass eine zentrale Krafteinleitung auf die Spindelmutter möglich ist. Der erste Flansch hat insbesondere den Vorteil, dass allein eine Schubübertragung der Übertragungskraft von der Spindelmutter auf das Blechelement notwendig ist. Darüber hinaus ist der Flansch besonders einfach zu fertigen und erlaubt eine einfache Montage, indem zum Beispiel der Spindeltrieb ohne das Blechelement mit der Reibkupplung verbunden wird und anschließend das Blechelement mit dem ersten Flansch mit der Spindelmutter in Anschlag gebracht wird. Alternativ kann das Blechelement über den ersten Flansch mit der Spindelmutter bereits verbunden sein, wenn der Spindeltrieb montiert wird und durch eine Verkippung des Blechelements um die Rotationsachse mit dem bereits vormontierten Nachstellring verbunden werden.

Gemäß einer weiteren vorteilhaften Ausführungsform des Spindeltriebs weist das Blechelement einen zweiten Flansch auf, welcher dazu eingerichtet ist, in einen Eingriff in dem Nachstellring einzugreifen, sodass das Blechelement infolge einer translatorischen Bewegung der Spindelmutter den Nachstellring in eine Nachstellrichtung um die Rotationsachse verdreht.

Es sei an dieser Stelle darauf hingewiesen, dass die gewählte Begrifflichkeit nicht bedingt, dass ein erster Flansch vorhanden sein muss, sondern lediglich der eindeutigen Unterscheidbarkeit in dieser Darstellung dient.

Mit dem zweiten Flansch ist es möglich, eine besonders einfache Anbindung an den Nachstellring zu ermöglichen, wobei zugleich das Blechelement einfach zu fertigen ist. Besonders bevorzugt weist das Blechelement sowohl den ersten Flansch gemäß der obigen Beschreibung als auch den zweiten Flansch auf. Der Eingriff des Nachstellrings ist dabei bevorzugt eine Vertiefung, kann aber ebenfalls ein weiterer Flansch sein, an dem der zweite Flansch anliegt. Besonders bevorzugt ist der zweite Flansch dabei derart eingerichtet, dass der Nachstellring über seinen Eingriff gezogen wird. Somit ist das Blechelement zwischen der Spindelmutter und dem Eingriff des Nachstellrings eingespannt und somit bereits infolge der Übertragungskraft vorgespannt und fixiert. Der Spindeltrieb kann dabei komplett vormontiert sein oder aber das Blechelement nach der Montage eingeführt werden, indem es um die Rotationsachse verkippt wird. Auch kann das Blechelement bereits mit dem Nachstellring gefügt sein, bevor der übrige Spindeltrieb mit der Reibkupplung verbunden wird.

Gemäß einer weiteren vorteilhaften Ausführungsform des Spindeltriebs ist das Blechelement im Zusammenbau um die dritte Raumachse in Bezug zur Spindelwelle und zu der Rotationsachse verkippbar, um eine relative Höhenveränderung zum Nachstellring auszugleichen.

In vielen Anwendungen führt der Nachstellring infolge der Verdrehung eine Höhenveränderung relativ zur Spindelwelle aus, insbesondere wenn die Spindelwelle auf der Anpressplatte montiert ist und der Nachstellring an einem axial fixierten Bauteil der Reibkupplung, zum Beispiel dem Kupplungsdeckel, anliegt. Um diese Relativbewegung auszugleichen, ohne weitere Maßnahmen an dem Nachstellring und/oder der Spindelwelle beziehungsweise der Spindelmutter ausführen zu müssen, ist es besonders vorteilhaft, das Blechelement derart einzurichten, dass es im Zusammenbau um die dritte Raumachse in Bezug zur Spindelwelle und zur Rotationsachse des Nachstellrings verkippbar ist. Die dritte Raumachse ist also in einem rechten Winkel jeweils zur Spindelwelle und zur Rotationsachse angeordnet, wobei die Spindelwelle und die Rotationsachse ebenfalls in einem rechten Winkel zueinander angeordnet sind.

Gemäß einer weiteren vorteilhaften Ausführungsform des Spindeltriebs ist die Spindelmutter mit dem Übertragungselement rotationsfest verbunden, bevorzugt mittels einer Verstiftung, und so gegen ein Rückstellen gesichert.

Bei manchen Anwendungen kann infolge der Verwendung des Blechelements und der zentralen Einleitung der Übertragungskraft auf die Spindelmutter die Reibung zwischen der Spindelmutter und dem Schneckentrieb derart niedrig sein, dass ein ungewolltes Verdrehen der Spindelmutter stattfinden könnte und somit die Nachstellung wieder gelöst wird beziehungsweise eine ungewünschte Nachstellung stattfindet. Besonders vorteilhaft kann dies unterbunden werden, indem das Übertragungselement mit der Spindelmutter rotationsfest verbunden wird, sodass die Spindelmutter nicht um die Achse der Spindelwelle verdrehbar ist, weil das Übertragungselement lediglich um die Rotationsachse des Nachstellrings verkippbar ist, und gegebenenfalls um die dritte Raumachse wie oben beschrieben. Dies kann besonders bevorzugt mittels einer Verstiftung ausgeführt sein, so dass eine nachträgliche Montage des Übertragungselements mit der Spindelmutter möglich ist. Dabei ist die Verstiftung besonders vorteilhaft derart angeordnet, dass im Bereich der Verstiftung die zentrale Krafteinleitung auf die Spindelmutter stattfindet.

Gemäß einer weiteren vorteilhaften Ausführungsform des Spindeltriebs ist die Spindelmutter gegenüber einem Bauteil der Reibkupplung gegen relative Rotation blockiert und so gegen ein Rückstellen gesichert.

Die hier vorgeschlagene Maßnahme kann alternativ oder zusätzlich zu der obigen Ausführungsform zur Verhinderung der Verdrehung der Spindelmutter eingesetzt werden. Das Bauteil der Reibkupplung ist nicht um die Achse der Spindelwelle verdrehbar, so dass die Spindelmutter bei einem Anliegen zum Beispiel an einer Kante gegen eine Fläche oder einen Flansch effektiv gegen ein Verdrehen gesichert werden kann. Eine solche Sicherung kann dabei (je nach Bedarf) einseitig oder beidseitig eingerichtet werden. In einer besonders bevorzugten Ausführungsform ist die Spindelmutter als Rechteck ausgeführt und liegt reibungsarm auf einer fixierten Fläche auf. Dabei kann auch die Aufnahme des Spindeltriebs zwischen der Spindelmutter und dem Bauteil der Reibkupplung angeordnet sein.

Gemäß einem weiteren Aspekt der Erfindung wird eine weggesteuerte Nachstelleinrichtung für eine Reibkupplung vorgeschlagen, welche zumindest die folgenden Komponenten aufweist:
- einen verdrehbaren Nachstellring mit zumindest einer ersten Rampe;
- ein Gegenelement mit zumindest einer zweite Rampe, wobei das Gegenelement und der Nachstellring mit ihren jeweiligen Rampen aufeinandergesetzt eine Gesamthöhe bilden, wobei die Gesamthöhe mittels eines Verdrehens des Nachstellrings mittels der zumindest einen ersten Rampe und der zumindest einen zweiten Rampe veränderbar ist; und
- ein Spindeltrieb gemäß der obigen Beschreibung, wobei mittels einer translatorischen Bewegung der Spindelmutter und dem Übertragungselement der Nachstellring verdrehbar ist.

Die Nachstelleinrichtung für eine Reibkupplung ist dazu vorgesehen, ein Nachlassen der Dicke des Reibbelags einer Reibkupplung infolge von Verschleiß derart auszugleichen, dass der Abstand zwischen den Reibpartnern, zum Beispiel einer Anpressplatte und einer korrespondierenden Reibscheibe, zwischen denen zumindest ein Reibbelag vorgesehen ist, (nahezu) konstant gehalten wird, während zugleich der Einrückweg der Betätigungsvorrichtung für die Reibkupplung ebenfalls (nahezu) konstant gehalten wird. Dies wird dadurch erreicht, dass der Nachstellring und das Gegenelement mit der Rampenpaarung aus erster Rampe und zweiter Rampe, beziehungsweise eine Mehrzahl von Rampenpaarungen, eine Gesamthöhe aufweisen, die mit Hilfe der zwei aufeinander liegenden Rampen durch eine Verdrehung des Nachstellrings eine Veränderung der Gesamthöhe bewirken. Das Gegenelement ist dabei bevorzugt in die Anpressplatte der Reibkupplung integriert, so dass also die zumindest eine zweite Rampe eine Oberflächengestaltung der Rückseite der Anpressplatte bildet. Es sei darauf hingewiesen, dass es lediglich vorteilhaft ist, den Nachstellring zu verdrehen anstatt das Gegenelement zu verdrehen, insbesondere wenn es in die Anpressplatte integriert ist. Grundsätzlich ist auch eine Verdrehung des Gegenelements gegenüber einem starren Nachstellring mit der hier vorgeschlagenen Erfindung kompatibel.

Zum gesteuerten Verdrehen des Nachstellrings, insbesondere bei einer weggesteuerten Nachstelleinrichtung, ist eine Spindelwelle mit einem Antriebsritzel vorgesehen, wobei das Antriebsritzel bei einer Zunahme des Abstands zwischen der Anpressplatte und der korrespondierenden Reibscheibe angetrieben wird, so dass der Schneckentrieb, welcher auf der Spindelwelle angeordnet ist, um ein Stück gedreht wird, und somit eine translatorische Bewegung einer Spindelmutter bewirkt wird. Die Spindelmutter greift dabei mittelbar in den verdrehbaren Nachstellring ein, so dass die translatorische Bewegung der Spindelmutter in eine Verdrehung des Nachstellrings übersetzt wird. Weil die Spindelwelle bevorzugt tangential zum Nachstellring angeordnet ist und somit eine relative Annäherung oder Entfernung zwischen der Spindelmutter und dem Eingriff des Nachstellrings stattfindet, ist der Einsatz eines Übertragungselements gemäß der obigen Beschreibung besonders vorteilhaft. Weil die Relativbewegung mit abnehmendem Radius des Nachstellrings zunimmt, ist die Konfiguration für kleine Nachstelleinrichtungen besonders vorteilhaft.

Gemäß einem weiteren Aspekt der Erfindung wird eine Reibkupplung mit einer Rotationsachse zum lösbaren Verbinden einer Abtriebswelle mit einem Antriebsstrang vorgeschlagen, welche zumindest die folgenden Komponenten aufweist:
- zumindest ein Reibpaket mit zumindest einer Anpressplatte und zumindest einer korrespondierenden Reibscheibe, wobei zwischen der zumindest einen Anpressplatte und der zumindest einen korrespondierenden Reibscheibe zumindest ein verschleißbarer Reibbelag angeordnet ist, und wobei über das Reibpaket im angepressten Zustand mittels des zumindest einen Reibbelags ein Drehmoment übertragbar ist; und
- zumindest eine weggesteuerte Nachstelleinrichtung gemäß der obigen Beschreibung, die dazu eingerichtet ist, eine Veränderung eines Abstands zwischen der zumindest einen Anpressplatte und der zumindest einen korrespondierenden Reibscheibe bei einer abnehmenden Gesamtdicke des zumindest einen Reibbelags auszugleichen.

Die Reibkupplung ist dazu eingerichtet, ein Drehmoment lösbar von einer Abtriebswelle auf einen Antriebsstrang und umgekehrt zu bewerkstelligen. Dies wird in der Regel über das zumindest eine Reibpaket erreicht, welches eine axial verschiebbare, in der Regel mit der Abtriebswelle rotationsfeste, Anpressplatte aufweist, die gegen zumindest eine korrespondierende Reibscheibe pressbar ist. Infolge der Anpresskraft ergibt sich eine Reibkraft über die Reibfläche, die multipliziert mit dem mittleren Radius der Reibfläche ein übertragbares Drehmoment ergibt. Die Nachstelleinrichtung ist zwischen der Betätigungskraftaufgabe und der Anpressung vorgesehen und muss daher für die Übertragung einer hohen Druckkraft eingerichtet sein. Daher sind in vielen Konfigurationen hohe Reibkräfte vorhanden, die bei einer Bewegung des Nachstellrings durch die Spindelmutter überwunden werden muss. Die hier vorgeschlagene Nachstelleinrichtung erlaubt eine hohe Übertragungskraft an der Spindelmutter, weil ein Verkippen effektiv unterbunden wird. Daher eignet sich die Nachstelleinrichtung für Reibkupplungen mit hohen Anpresskräften.

Gemäß einem weiteren Aspekt der Erfindung wird auch ein Kraftfahrzeug vorgeschlagen, welches eine Antriebseinheit mit einer Abtriebswelle, einen Antriebsstrang und eine Reibkupplung gemäß der obigen Beschreibung zum lösbaren Verbinden der Abtriebswelle mit dem Antriebsstrang aufweist.

Die meisten Kraftfahrzeuge weisen heutzutage einen Frontantrieb auf und ordnen daher bevorzugt die Antriebseinheit, beispielsweise eine Verbrennungskraftmaschine oder ein Elektromotor, vor der Fahrerkabine und quer zur Hauptfahrrichtung an. Der Bauraum ist gerade bei einer solchen Anordnung besonders gering und es ist daher besonders vorteilhaft, eine Reibkupplung kleiner Baugröße zu verwenden.

Verschärft wird die Bauraumsituation bei Personenkraftwagen der Kleinwagenklasse nach europäischer Klassifizierung. Die verwendeten Aggregate in einem Personenkraftwagen der Kleinwagenklasse sind gegenüber Personenkraftwagen größerer Wagenklassen nicht wesentlich verkleinert. Dennoch ist der zur Verfügung stehende Bauraum bei Kleinwagen wesentlich kleiner. Mit der oben beschriebenen Reibkupplung ist ein platzsparender Aufbau möglich, bei dem ein kleiner Durchmesser des Nachstellrings möglich ist und bei der zudem dem Bedarf nach einer großen Anpresskraft nachgekommen werden kann.

Personenkraftwagen werden einer Fahrzeugklasse nach beispielsweise Größe, Preis, Gewicht, Leistung eingeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car und im Britischen Markt entsprechen sie der Klasse Supermini beispielsweise der Klasse City Car. Beispiele der Kleinstwagenklasse sind ein Volkswagen Fox oder ein Renault Twingo. Beispiele der Kleinwagenklasse sind ein Alfa Romeo Mito, Volkswagen Polo, Ford Fiesta oder Renault Clio.

Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Es zeigen:
- Fig. 1:: einen Spindeltrieb mit einer konventionellen Spindelmutter,
- Fig. 2:: einen Spindeltrieb mit Blechelement,
- Fig. 3:: eine Reibkupplung mit Blechelement,
- Fig. 4:: ein Übertragungselement,
- Fig. 5:: eine Reibkupplung mit weggesteuerter Antriebsklinke,
- Fig. 6:: ein Kraftfahrzeug mit Reibkupplung.

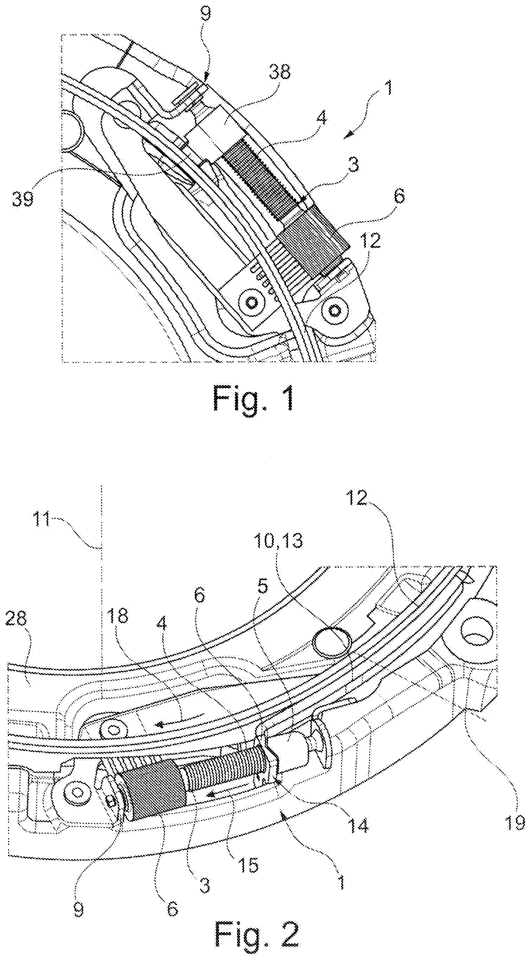

Fig. 1 zeigt einen Spindeltrieb 1 mit einer Spindelwelle 3, auf der ein Schneckentrieb 4 angeordnet ist, welcher über ein Antriebsritzel 6 angetrieben wird. Die Spindelwelle 3 ist in einer Aufnahme 9 aufgenommen und so an einem Bauteil einer Reibkupplung befestigbar. Auf dem Schneckentrieb 4 ist eine konventionelle Spindelmutter 38 vorgesehen, die ein konventionelles Übertragungselement 39 für einen Nachstellring 12 aufweist. Es ist deutlich zu erkennen, dass bei einer Belastung des Übertragungselements 39 die Spindelmutter 38 verkippen und verkanten kann.

In Fig. 2 ist ein Spindeltrieb 1 in einer Aufnahme 9 auf einer Anpressplatte 28 gezeigt. Hierbei wird eine Spindelwelle 3 mit einem Schneckentrieb 4 über ein Antriebsritzel 6 verdreht, sodass die Spindelmutter 5 in Bewegungsrichtung 15 geführt wird. Über einen ersten Flansch 14 wird das Übertragungselement 10, welches hier als Blechelement 13 ausgeführt ist, in Bewegungsrichtung 15 geführt, sodass der angeschlossene Nachstellring 12 in Nachstelleinrichtung 18 verdreht wird. Dabei ist das Übertragungselement um die Rotationsachse 11 verkippbar sowie um die dritte Raumachse 19 verkippbar, um die Relativbewegungen zwischen dem Nachstellring 12 aufgrund der Umfangsbewegung entlang der Nachstellrichtung 18 und der Bewegungsrichtung 15 sowie einer relativen Höhenveränderung zwischen dem Nachstellring 12 und der Anpressplatte 18 auszugleichen.

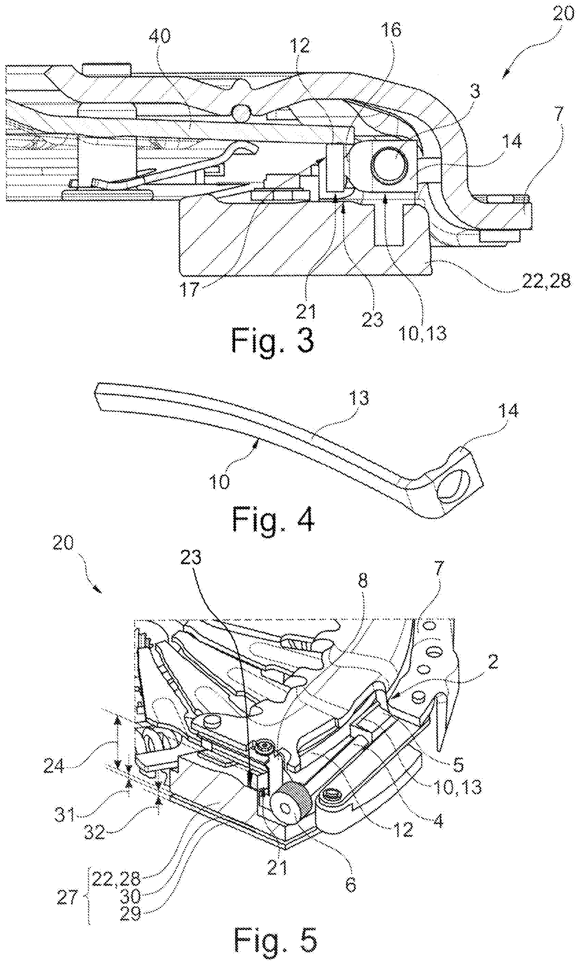

In Fig. 3 ist eine Reibkupplung 20 im Schnitt gezeigt, wobei hier die Spindelwelle 3 kurz vor dem ersten Flansch 14 des Übertragungselements 10, welches hier ebenfalls als Blechelement 13 ausgeführt ist, geschnitten ist. Das Blechelement weist hier weiterhin einen zweiten Flansch 16 auf, der in einem verdeckten Eingriff 17 des Nachstellrings 12 eingreift. Über die erste Rampe 21 des Nachstellrings 12 und die zweite Rampe 23 des Gegenelements 22, welches hier einstückig mit der Anpressplatte 28 gebildet ist, wird eine Veränderung des Einrückwegs (vgl. Fig. 5) ausgeglichen, sodass die Tellerfeder 40 ebenso wie die Anpressplatte 28 einen (nahezu) konstanten Weg zurücklegt, unabhängig vom Verschleiß eines Reibbelags. Der Nachstellring 12 sowie die Tellerfeder 40 führen in Bezug auf den Kupplungsdeckel 7 der Reibkupplung 20 einen in seiner relativen Lage konstanten Hubweg aus, während sich der Hubweg der Anpressplatte 28 entsprechend der Verdrehung des Nachstellrings 12 relativ zur Anpressplatte 28 infolge der aufeinanderliegenden ersten Rampe 21 und zweiten Rampe 23 mit dem Verschleiß verlagert.

In Fig. 4 ist eine bevorzugte Ausführungsform eines Übertragungselements 10 gezeigt, welches hier als Blechelement 13 ausgeführt ist und einen vorteilhaft geformten ersten Flansch 14 aufweist. Der erste Flansch 14 ist dabei so ausgeführt, dass in jeglicher Verkippungslage die Übertragungskraft zentral in die Spindelmutter 5 (hier nicht dargestellt) eingeführt wird und so ein Verkippen oder sogar Verkanten der Spindelmutter 5 verhindert wird.

In Fig. 5 ist eine isometrische Ansicht einer Reibkupplung 20 im Schnitt gezeigt, bei der eine Antriebsklinke 8 gezeigt ist, welche am Kupplungsdeckel 7 befestigt ist und so weggesteuert auf das Antriebsritzel 6 einwirkt. Über den Schneckentrieb 4 wird die Spindelmutter 5 angetrieben, welche dadurch den Nachstellring 12 antreibt und somit eine Veränderung der Gesamthöhe 24 von Nachstellring 12 und Gegenelement 22, welches hier ebenfalls als einstückig mit der Antriebsplatte 28 ausgeführt ist, infolge der Verschiebung der ersten Rampe 21 und der zweiten Rampe 23 zueinander bewirkt. Hierdurch wird eine Veränderung des Abstands 31 zwischen der Anpressplatte 28 und dem Reibbelag 30 der korrespondierenden Reibscheibe 29 ausgeglichen, obwohl bei einem Verschleiß des Reibbelags 30 die Gesamtdicke 32 abnimmt. Somit ist der Einrückweg der Anpressplatte 28 des Reibpakets 27 (nahezu) konstant, während zugleich der Betätigungsweg (nahezu) konstant bleibt.

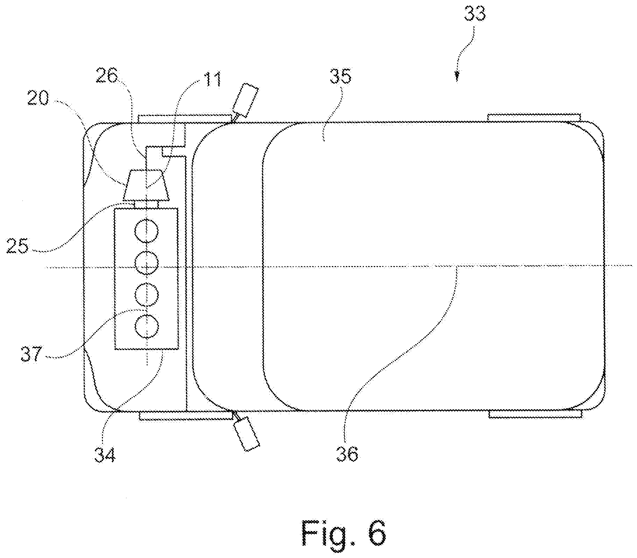

In Fig. 6 ist ein Kraftfahrzeug 33 mit einer Antriebseinheit 34 gezeigt, welche mit ihrer Motorachse 37 quer zur Längsachse 36 vor der Fahrerkabine 35 angeordnet ist. Die Antriebseinheit 34 ist hier als Verbrennungskraftmaschine dargestellt, welche über eine Abtriebswelle 25 mittels einer Reibkupplung 20 mit einer Rotationsachse 11 mit einem hier rein schematisch dargestellten Antriebsstrang 26 verbunden ist.

Mit dem hier vorgeschlagenen Übertragungselement ist eine stets zentrale Krafteinleitung in eine Spindelmutter gewährleistet, wodurch ein Blockieren der Nachstelleinrichtung verhindert wird.

### Bezugszeichenliste

- 1: Spindeltrieb
- 2: weggesteuerte Nachstelleinrichtung
- 3: Spindelwelle
- 4: Schneckentrieb
- 5: Spindelmutter
- 6: Antriebsritzel
- 7: Kupplungsdeckel
- 8: Antriebsklinke
- 9: Aufnahme
- 10: Übertragungselement
- 11: Rotationsachse
- 12: Nachstellring
- 13: Blechelement
- 14: erster Flansch
- 15: Bewegungsrichtung
- 16: zweiter Flansch
- 17: Eingriff
- 18: Nachstellrichtung
- 19: dritte Raumachse
- 20: Reibkupplung
- 21: erste Rampe
- 22: Gegenelement
- 23: zweite Rampe
- 24: Gesamthöhe
- 25: Abtriebswelle
- 26: Antriebsstrang
- 27: Reibpaket
- 28: Anpressplatte
- 29: Reibscheibe
- 30: Reibbelag
- 31: Abstand
- 32: Gesamtdicke
- 33: Kraftfahrzeug
- 34: Antriebseinheit
- 35: Fahrerkabine
- 36: Längsachse
- 37: Motorachse

## Patentansprüche

1. Weggesteuerte Nachstelleinrichtung (2) für eine Reibkupplung (20), aufweisend zumindest die folgenden Komponenten:
- einen verdrehbaren Nachstellring (12) mit zumindest einer ersten Rampe (21);
- ein Gegenelement (22) mit zumindest einer zweite Rampe (23), wobei das Gegenelement (22) und der Nachstellring (12) mit ihren jeweiligen Rampen (21,23) aufeinandergesetzt eine Gesamthöhe (24) bilden, wobei die Gesamthöhe (24) mittels eines Verdrehens des Nachstellrings (12) mittels der zumindest einen ersten Rampe (21) und der zumindest einen zweiten Rampe (23) veränderbar ist; und
- ein Spindeltrieb (1) aufweisend zumindest die folgenden Komponenten:
- eine Spindelwelle (3) mit einem Schneckentrieb (4);
- eine Spindelmutter (5), die mittels des Schneckentriebs (4) der Spindelwelle (3) infolge einer Verdrehung der Spindelwelle (3) translatorisch bewegbar ist;
- ein Antriebsritzel (6) zum Antreiben der Spindelwelle (3);
- eine an einem axial fixierten Bauteil der Reibkupplung (20) befestigbare Antriebsklinke (8) zum weggesteuerten Antreiben des Antriebsritzels (6);
- eine Aufnahme (9) für die Spindelwelle (3), die die Spindelwelle (3) axial fixiert; und
- ein Übertragungselement (10), welches dazu eingerichtet ist, die translatorische Bewegung der Spindelmutter (5) auf einen um eine quer zur Spindelwelle (3) ausgerichtete Rotationsachse (11) verdrehbaren Nachstellring (12) zu übertragen, wodurch der Nachstellring (12) verdrehbar ist,
**dadurch gekennzeichnet, dass** das Übertragungselement (10) ein um die Rotationsachse (11) verkippbares Blechelement (13) umfasst, über welches im Zusammenbau die Übertragungskraft von der Spindelmutter (5) auf den Nachstellring (12) zentral auf die Spindelmutter (5) einleitbar ist.

2. Weggesteuerte Nachstelleinrichtung (2) nach Anspruch 1, wobei das Blechelement (13) einen ersten Flansch (14) aufweist, welcher dazu eingerichtet ist, an der Spindelmutter (5) anzuliegen, sodass das Blechelement (13) infolge der translatorischen Bewegung der Spindelmutter (5) von der Spindelmutter (5) verkippungsfrei in Bewegungsrichtung (15) geschoben wird.

3. Weggesteuerte Nachstelleinrichtung (2) nach Anspruch 1 oder 2, wobei das Blechelement (13) einen zweiten Flansch (16) aufweist, welcher dazu eingerichtet ist, in einen Eingriff (17) in dem Nachstellring (12) einzugreifen, sodass das Blechelement (13) infolge der translatorischen Bewegung der Spindelmutter (5) den Nachstellring (12) in eine Nachstellrichtung (18) um die Rotationsachse (11) verdreht.

4. Weggesteuerte Nachstelleinrichtung (2) nach einem der vorhergehenden Ansprüche, wobei das Blechelement (13) im Zusammenbau um eine dritte Raumachse (19) in Bezug zur Spindelwelle (3) und zu der Rotationsachse (11) verkippbar ist, um eine relative Höhenveränderung zum Nachstellring (12) auszugleichen.

5. Weggesteuerte Nachstelleinrichtung (2) nach einem der vorhergehenden Ansprüche, wobei die Spindelmutter (5) mit dem Übertragungselement (10) rotationsfest verbunden ist, bevorzugt mittels einer Verstiftung, und so gegen ein Rückstellen gesichert ist.

6. Weggesteuerte Nachstelleinrichtung (2) nach einem der vorhergehenden Ansprüche, wobei die Spindelmutter (5) gegenüber einem Bauteil der Reibkupplung (20) gegen relative Rotation blockiert ist und so gegen ein Rückstellen gesichert ist.

7. Weggesteuerte Nachstelleinrichtung (2) nach einem der vorhergehenden Ansprüche, wobei das axial fixierte Bauteil der Reibkupplung (20) als Kupplungsdeckel (7) ausgebildet ist.

8. Reibkupplung (20) mit einer Rotationsachse (11) zum lösbaren Verbinden einer Abtriebswelle (25) mit einem Antriebsstrang (26), aufweisend zumindest die folgenden Komponenten:
- zumindest ein Reibpaket (27) mit zumindest einer Anpressplatte (28) und zumindest einer korrespondierenden Reibscheibe (29), wobei zwischen der zumindest einen Anpressplatte (28) und der zumindest einen korrespondierenden Reibscheibe (29) zumindest ein verschleißbarer Reibbelag (30) angeordnet ist, und wobei über das Reibpaket (27) im angepressten Zustand mittels des zumindest einen Reibbelags (30) ein Drehmoment übertragbar ist; und
- zumindest eine weggesteuerte Nachstelleinrichtung (2) nach Anspruch 7, die dazu eingerichtet ist, eine Veränderung eines Abstands (31) zwischen der zumindest einen Anpressplatte (28) und der zumindest einen korrespondierenden Reibscheibe (29) bei einer abnehmenden Gesamtdicke (32) des zumindest einen Reibbelags (30) auszugleichen.

9. Kraftfahrzeug (33) aufweisend eine Antriebseinheit (34) mit einer Abtriebswelle (25), einen Antriebsstrang (26) und eine Reibkupplung (20) nach Anspruch 8.

## Claims

1. Displacement-controlled adjusting device (2) for a friction clutch (20), having at least the following components:
- a rotatable adjusting ring (12) with at least one first ramp (21);
- a counter-element (22) with at least one second ramp (23), the counter-element (22) and the adjusting ring (12) forming an overall height (24) when placed onto one another by way of their respective ramps (21, 23), it being possible for the overall height (24) to be changed by means of a rotation of the adjusting ring (12) by means of the at least one first ramp (21) and the at least one second ramp (23); and
- a spindle drive (1) having at least the following components:
- a spindle shaft (3) with a worm drive (4);
- a spindle nut (5) which can be moved translationally by means of the worm drive (4) of the spindle shaft (3) as a consequence of a rotation of the spindle shaft (3);
- a drive pinion (6) for driving the spindle shaft (3);
- a drive pawl (8) which can be fastened to an axially fixed component of the friction clutch (20) for driving the drive pinion (6) in a displacement-controlled manner;
- a receptacle (9) for the spindle shaft (3), which receptacle (9) fixes the spindle shaft (3) axially; and
- a transmission element (10) which is set up to transmit the translational movement of the spindle nut (5) to an adjusting ring (12) which can be rotated about a rotational axis (11) which is oriented transversely with respect to the spindle shaft (3), as a result of which the adjusting ring (12) can be rotated,
**characterized in that** the transmission element (10) comprises a sheet metal element (13) which can be tilted about the rotational axis (11) and via which, when assembled, the transmission force from the spindle nut (5) to the adjusting ring (12) can be introduced centrally to the spindle nut (5).

2. Displacement-controlled adjusting device (2) according to Claim 1, the sheet metal element (13) having a first flange (14) which is set up to bear against the spindle nut (5), with the result that the sheet metal element (13) is pushed without tilting in the movement direction (15) by the spindle nut (5) as a consequence of the translational movement of the spindle nut (5).

3. Displacement-controlled adjusting device (2) according to Claim 1 or 2, the sheet metal element (13) having a second flange (16) which is set up to engage into an engagement means (17) in the adjusting ring (12), with the result that the sheet metal element (13) rotates the adjusting ring (12) about the rotational axis (11) in an adjusting direction (18) as a consequence of the translational movement of the spindle nut (5).

4. Displacement-controlled adjusting device (2) according to one of the preceding claims, it being possible, when assembled, for the sheet metal element (13) to be tilted about a third spatial axis (19) in relation to the spindle shaft (3) and to the rotational axis (11), in order to compensate for a relative height change with respect to the adjusting ring (12).

5. Displacement-controlled adjusting device (2) according to one of the preceding claims, the spindle nut (5) being connected in a rotationally locked manner to the transmission element (10), preferably by means of a pinning means, and thus being secured against resetting.

6. Displacement-controlled adjusting device (2) according to one of the preceding claims, the spindle nut (5) being blocked against relative rotation with respect to a component of the friction clutch (20), and thus being secured against resetting.

7. Displacement-controlled adjusting device (2) according to one of the preceding claims, the axially fixed component of the friction clutch (20) being configured as a clutch cover (7).

8. Friction clutch (20) having a rotational axis (11) for releasably connecting an output shaft (25) to a drive train (26), having at least the following components:
- at least one friction package (27) with at least one pressure plate (28) and at least one corresponding friction disc (29), at least one friction lining (30) which is subject to wear being arranged between the at least one pressure plate (28) and the at least one corresponding friction disc (29), and it being possible for a torque to be transmitted via the friction package (27) in the pressed-on state by means of the at least one friction lining (30); and
- at least one displacement-controlled adjusting device (2) according to Claim 7 which is set up to compensate for a change in a spacing (31) between the at least one pressure plate (28) and the at least one corresponding friction disc (29) in the case of a decreasing overall thickness (32) of the at least one friction lining (30).

9. Motor vehicle (33) having a drive unit (34) with an output shaft (25), a drive train (26) and a friction clutch (20) according to Claim 8.

## Revendications

1. Dispositif de rattrapage (2) commandé en fonction de la course pour un embrayage à friction (20), comprenant au moins les composants suivants :
- une bague de rattrapage (12) rotative dotée d'au moins une première rampe (21) ;
- un élément homologue (22) doté d'au moins une deuxième rampe (23), l'élément homologue (22) et la bague de rattrapage (12) formant une hauteur totale (24) avec leurs rampes (21, 23) respectives posées l'une sur l'autre, la hauteur totale (24) pouvant être modifiée au moyen d'une rotation de la bague de rattrapage (12) au moyen de l'au moins une première rampe (21) et de l'au moins une deuxième rampe (23) ; et
- une commande à broche (1) qui possède au moins les composants suivants :
- un arbre de broche (3) muni d'une commande à vis sans fin (4) ;
- un écrou de broche (5) qui peut être déplacé en translation au moyen de la commande à vis sans fin (4) de l'arbre de broche (3) suite à une rotation de l'arbre de broche (3) ;
- un pignon d'entraînement (6) destiné à entraîner l'arbre de broche (3) ;
- un cliquet d'entraînement (8) qui peut être fixé à un élément structural immobilisé axialement de l'embrayage à friction (20) et servant à l'entraînement commandé en fonction de la course du pignon d'entraînement (6) ;
- un logement (9) pour l'arbre de broche (3), qui immobilise l'arbre de broche (3) dans le sens axial ; et
- un élément de transmission (10) qui est conçu pour transmettre le mouvement de translation de l'écrou de broche (5) à une bague de rattrapage (12) qui peut tourner autour d'un axe de rotation (11) orienté transversalement par rapport à l'arbre de broche (3), moyennant quoi la bague de rattrapage (12) peut être tournée,
**caractérisé en ce que** l'élément de transmission (10) comporte un élément en tôle (13) qui peut basculer autour de l'axe de rotation (11), par le biais duquel, à l'état assemblé, la force de transmission de l'écrou de broche (5) sur la bague de rattrapage (12) peut être induite de manière centrale sur l'écrou de broche (5).

2. Dispositif de rattrapage (2) commandé en fonction de la course selon la revendication 1, l'élément en tôle (13) possédant une première bride (14) qui est conçue pour reposer contre l'écrou de broche (5), de sorte que l'élément en tôle (13), suite au mouvement de translation de l'écrou de broche (5), peut être coulissé par l'écrou de broche (5) sans basculement dans la direction du mouvement (15).

3. Dispositif de rattrapage (2) commandé en fonction de la course selon la revendication 1 ou 2, l'élément en tôle (13) possédant une deuxième bride (16) qui est conçue pour venir en prise dans une prise (17) dans la bague de rattrapage (12), de sorte que l'élément en tôle (13), suite au mouvement de translation de l'écrou de broche (5), fait tourner la bague de rattrapage (12) dans une direction de rattrapage (18) autour de l'axe de rotation (11).

4. Dispositif de rattrapage (2) commandé en fonction de la course selon l'une des revendications précédentes, l'élément en tôle (13), à l'état assemblé, pouvant basculer autour d'un troisième axe dans l'espace (19) en référence à l'arbre de broche (3) et à l'axe de rotation (11) afin de compenser un changement de hauteur relatif par rapport à la bague de rattrapage (12).

5. Dispositif de rattrapage (2) commandé en fonction de la course selon l'une des revendications précédentes, l'écrou de broche (5) étant relié en rotation solidaire à l'élément de transmission (10), de préférence au moyen d'un goupillage, et étant ainsi verrouillé contre un recul.

6. Dispositif de rattrapage (2) commandé en fonction de la course selon l'une des revendications précédentes, l'écrou de broche (5) étant bloqué contre une rotation relative par rapport à un élément structural de l'embrayage à friction (20) et étant ainsi verrouillé contre un recul.

7. Dispositif de rattrapage (2) commandé en fonction de la course selon l'une des revendications précédentes, l'élément structural immobilisé dans le sens axial de l'embrayage à friction (20) étant réalisé sous la forme d'un couvercle d'embrayage (7).

8. Embrayage à friction (20) comprenant un axe de rotation (11) servant à la liaison amovible d'un arbre de sortie (25) avec un groupe motopropulseur (26), comprenant au moins les composants suivants :
- au moins un bloc de friction (27) comprenant au moins un plateau de pressage (28) et au moins un disque de friction (29) correspondant, au moins une garniture de friction (30) d'usure étant disposée entre l'au moins un plateau de pressage (28) et l'au moins un disque de friction (29) correspondant, et un couple pouvant être transmis à l'état pressé au moyen de l'au moins une garniture de friction (30) par le biais du bloc de friction (27) ; et
- au moins un dispositif de rattrapage (2) commandé en fonction de la course selon la revendication 7, lequel est conçu pour compenser une modification d'un écart (31) entre l'au moins un plateau de pressage (28) et l'au moins un disque de friction (29) correspondant en présence d'une épaisseur totale (32) qui diminue de l'au moins une garniture de friction (30).

9. Véhicule automobile (33), comprenant une unité de propulsion (34) dotée d'un arbre de sortie (25), d'un groupe motopropulseur (26) et d'un embrayage à friction (20) selon la revendication 8.
